# EUROPEAN PATENT APPLICATION

(11) **EP 2 835 234 A1**
(43) Date of publication of application: **11.02.2015**
(21) Application number: 12873552.9
(22) Date of filing: 02.04.2012
(51) Int. Cl.: B25J 13/00, B25J 9/16

(54) **ROBOT SYSTEM AND ROBOT CONTROL DEVICE**

(71) Applicant: Kabushiki Kaisha Yaskawa Denki, Kitakyushu-shi, Fukuoka 806-0004 (JP)
(72) Inventor: YOSHIDA, Osamu, Kitakyushu-shi Fukuoka 806-0004 (JP); UENO, Tomohiro, Kitakyushu-shi Fukuoka 806-0004 (JP); KIHARA, Eiji, Kitakyushu-shi Fukuoka 806-0004 (JP); NAMBA, Taro, Kitakyushu-shi Fukuoka 806-0004 (JP)
(74) Representative: Viering, Jentschura & Partner Patent- und Rechtsanwälte
(86) International application number: PCT/JP2012/058984
(87) International publication number: WO 2013/150598

(57) **Abstract**

[object] To improve convenience.

[Solving means] A robot system 1 comprises a robot 110A configured to hold and load a plurality of luggage W to form a loaded body WW, a robot controller 120A configured to control a movement of the robot 110A, a large-capacity storage device 202 of a central server 200 configured to store loading information of each luggage W loaded by the robot 110A, a robot 110B configured to hold and unload the plurality of luggage W from the loaded body WW, and a robot controller 120B configured to control a movement of the robot 110B, the robot controller 120B determining a movement mode of the robot 110B based on the loading information of each luggage W stored in the large-capacity storage device 202, and controlling a movement of the robot 110B based on the determined movement mode.

## Description

### TECHNICAL FIELD

The present disclosure relates to a robot system and a robot controller.

### BACKGROUND ART

Patent Document 1 discloses an article position recognition device. This article position recognition device comprises a CCD camera that takes an image of a target object (article) on a pallet from above, an image processing unit that recognizes the target object based on the image data of the CCD camera, and a robot capable of at least moving the target object on the pallet on a plane.

### Patent Documents

Patent Document 1: Japanese patent laid-open 2003-172605

### DISCLOSURE OF THE INVENTION

### Problems to be Solved by the Invention

However, after loading work has been performed in which the target object is loaded using a robot at a certain site to form a loaded body, the loaded body is sometimes transported to another site, and unloading work is performed in which the target object is unloaded from the loaded body using a robot at the transport destination site. In such a case, generally, when the loading work is first performed at the loading-side site, the target object is detected using a visual sensor and an image processing unit to determine the movement mode of the robot, and the movement of the robot during the loading work is controlled based on the determined movement mode. Then, when the unloading work is performed at the unloading-side site as well, the target object of the loaded body is detected using a visual sensor and an image processing unit to determine the movement mode of the robot, and the movement of the robot during the unloading work is controlled based on the determined movement mode, in the same manner as the loading-side site. Thus, as described above, the prior art requires detection of the target object using a visual sensor and an image processing unit at both the loading-side site and unloading-side site, resulting in inconvenience.

The present invention has been made in view of such problems, and it is therefore an object of the present invention to provide a robot system and a robot controller capable of improving convenience.

### Means for Solving the Problems

In order to achieve the above-described object, according to one aspect of the present invention, there is provided a robot system, comprising a first robot configured to hold and load one or more target objects to form a loaded body, a first robot controller configured to control a movement of the first robot, a loading information storage device configured to store loading information of each target object loaded by the first robot, a second robot configured to hold and unload the one or more target objects from the loaded body, and a second robot controller configured to control a movement of the second robot, the second robot controller comprising a first movement mode determining part configured to determine a movement mode of the second robot based on the loading information of each target object stored in the loading information storage device, and controlling the movement of the second robot based on the movement mode determined by the first movement mode determining part.

### Advantages of the Invention

According to the present invention, it is possible to improve convenience.

### BRIEF DESCRIPTION OF THE DRAWINGS

FIG. 1 is a system configuration diagram schematically showing the overall configuration of a robot system in an embodiment.
FIG. 2 is an explanatory view showing another example of the central server.
FIG. 3 is an explanatory view schematically showing the configuration of a work facility of a loading site.
FIG. 4 is an explanatory view schematically showing the configuration of a work facility of an unloading site.
FIG. 5 is a functional block diagram showing the functional configuration of the robot controller of a loading site and the robot controller of an unloading site, and the central server.
FIG. 6 is a flowchart showing the control procedure executed by the robot controller of the loading site.
FIG. 7 is a flowchart showing the control procedure executed by the robot controller of the unloading site.

### BEST MODE FOR CARRYING OUT THE INVENTION

An embodiment will now be described with reference to accompanying drawings.

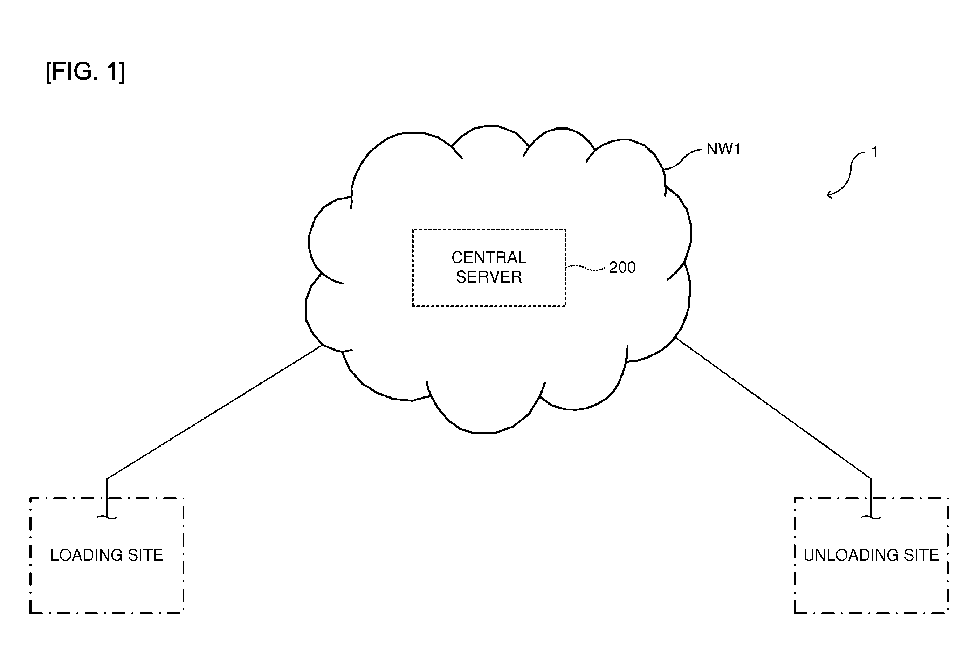

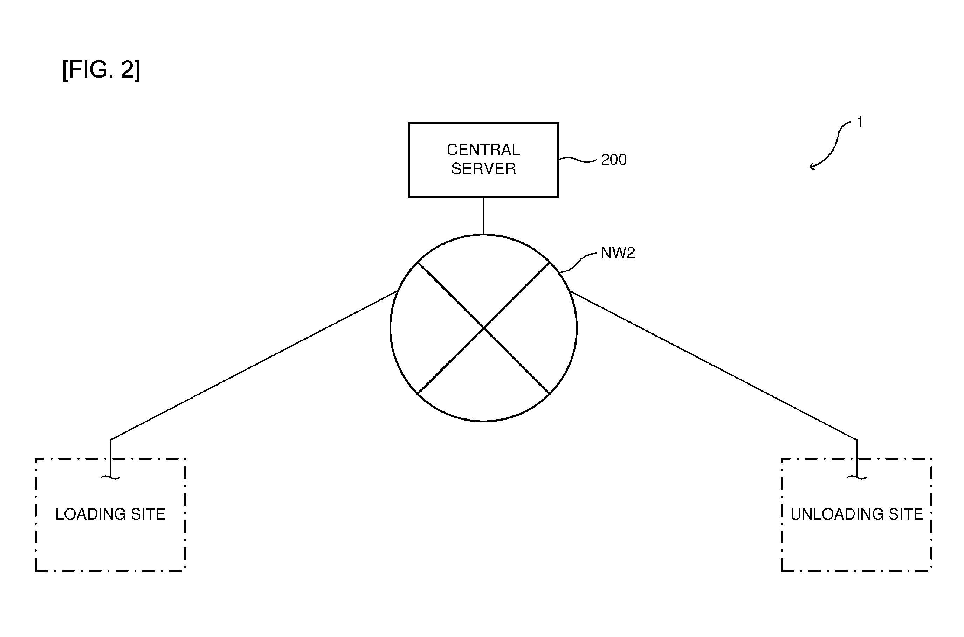

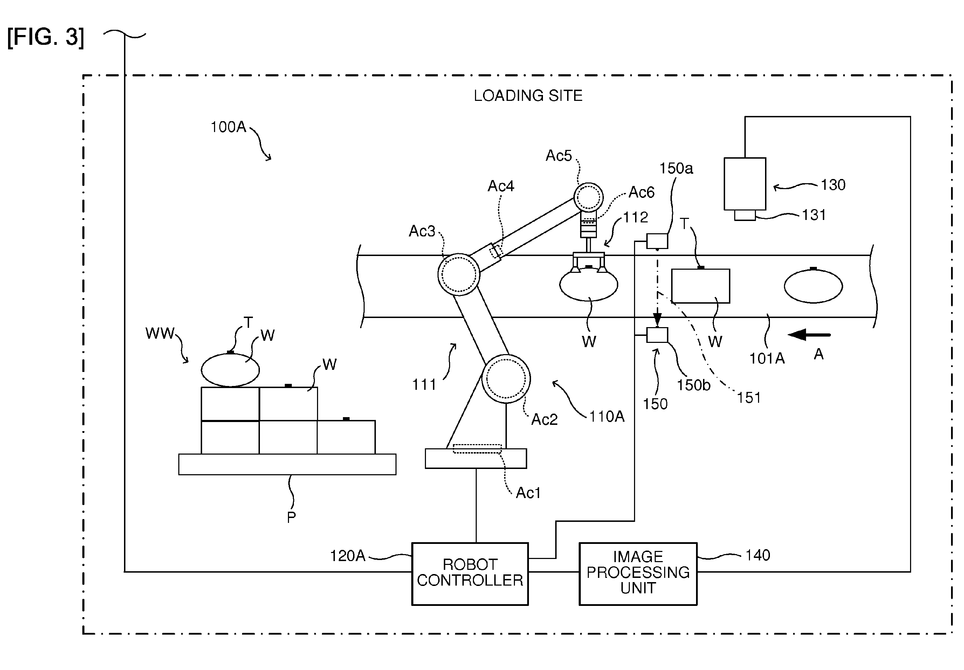

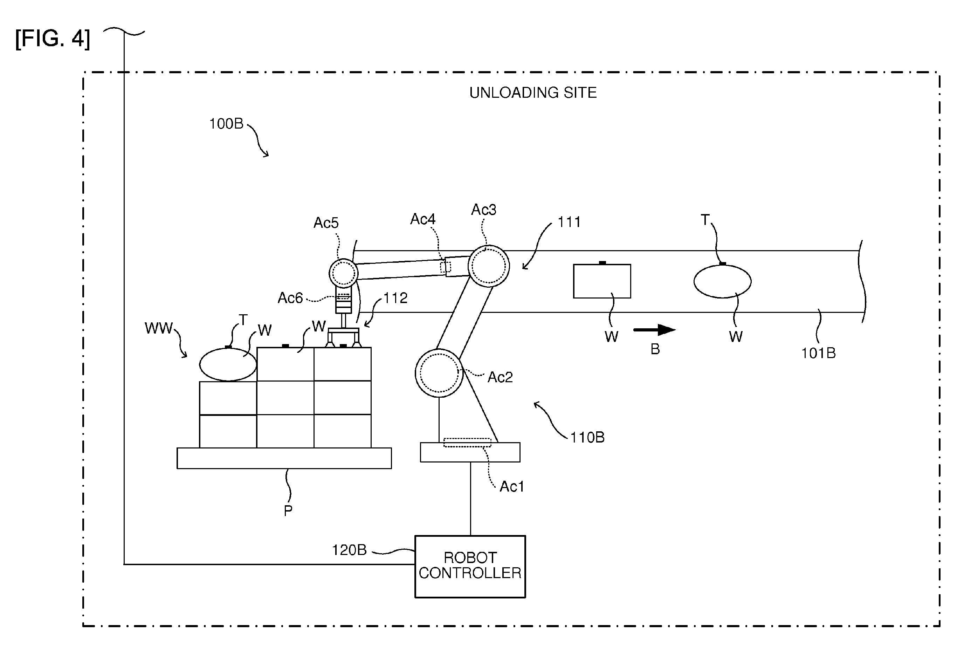

As shown in FIG. 1, a robot system 1 of this embodiment comprises a work facility 100A (not shown in FIG. 1; refer to FIG. 3 described later) disposed in a loading site, a work facility 100B (not shown in FIG. 1; refer to FIG. 4 described later) disposed in an unloading site, and a central server 200. The loading site is a site that loads a plurality of luggage W (target objects; refer to FIG. 3 described later) brought in by a user of a luggage transport service, for example. The unloading site is a site that unloads the plurality of luggage W loaded at the loading site and transported by suitable transport means (such as a truck, train, ship, or airplane, for example). The central server 200 is a server that is common to (shared by) the work facilities 100A, 100B of the loading and unloading sites. This central server 200 is configured as an aggregate of one or more computation devices and storage devices linked by a network cloud NW1, and is data-communicably connected to each of the work facilities 100A, 100B. Note that, as shown in FIG. 2, a single computation device connected to the respective work facilities 100A, 100B via a suitable network NW2 may be used as the central server 200. In this case, the central server 200 is installed in an office building or the like of a proprietary company of the robot system 1, for example.

As shown in FIG. 3, a conveyor 101A, a robot 110A, a robot controller 120A, a camera 130 comprising a lens 131, an image processing unit 140, and a height sensor 150 are disposed as the work facility 100A in the loading site. Note that the robot 110A is equivalent to the first robot and the third robot, and the robot controller 120A is equivalent to the first robot controller and the robot controller.

The conveyor 101A feeds the plurality of luggage W brought in by the user of the luggage transport service in a predetermined transport direction (the direction indicated by an arrow A in FIG. 3), for example. The luggage W, in this example, is an irregular object with inter-individual variance and irregularity in shape. An IC tag T is affixed to each of the luggage W. A tag ID which serves as unique identification information, and destination information that includes information on the destination (sending destination) of the luggage W are recorded on the IC tag T. Note that other information (such as the shape and weight information or owner information of the luggage W, for example) may also be stored in the IC tag T.

The robot 110A performs loading work in which it holds the luggage W that is continuously and successively fed by the conveyor 101A, and loads the luggage W onto pallets P disposed in accordance with destinations while sorting them in accordance with destinations, thereby forming loaded bodies WW. The formed loaded bodies WW, placed on the pallets P, are transported to the unloading sites in accordance with the destinations by suitable transport means. This robot 110A comprises an arm 111 and actuators Ac1, Ac2, Ac3, Ac4, Ac5, Ac6, each constituting a servo motor for driving this arm 111. A suction-type hand 112 capable of lifting (holding) the luggage W by vacuum suction is attached to the tip end of the arm 111. Further, while not shown in FIG. 3, a tool 112 (such as a servo hand, fork-type hand, or chuck-type hand, for example) that is a different type from the suction-type hand 112 is disposed near the robot 110A. The robot 110A performs a tool replacement movement using an ATC (Auto Tool Changer) or the like, making it possible to replace the tool 112 on the tip end of the arm 111. Furthermore, though not shown in FIG. 3, an IC tag reader for acquiring the destination information of the luggage W from the IC tag T affixed to the luggage W during the loading work is attached to the tip end side of the arm 111. The destination information of the luggage W acquired by the IC tag reader is output to the robot controller 120A.

The robot controller 120A is data-communicably connected to the above described central server 200 via the above described network cloud NW1. This robot controller 120A is intercommunicably connected to the servo motors of the respective actuators Ac1-Ac6 disposed on the above described arm 111, and controls the driving of the respective servo motors. With this arrangement, the overall movement of the respective actuators Ac1-Ac6, that is, the movement of the robot 110A, is controlled. Further, the robot controller 120A controls the movement of the tool 112 attached to the tip end of the above described arm 111 (such as turning a vacuum device (not shown) ON and OFF in order to change the suction part of the suction-type hand 112 to a vacuum state, for example), and the movement of the IC tag reader.

The camera 130 is fixed to a support member (not shown) on the upstream side above the transport path of the luggage W so that it can take an image of the fed luggage W via the above described lens 131. Note that the camera 130 may be disposed on the robot 110A side (such as on the tip end side of the arm 111, for example). This camera 130 takes an image of the fed luggage W via the lens 131, and generates image information including the image of the luggage W thus taken. The generated image information is output to the image processing unit 140.

The image processing unit 140 inputs the image information output from the camera 130, performs image analysis on the input image information, and detects the position, posture, and shape of the luggage W (such as the shape of the upper surface of the luggage W, for example). The image analysis information that includes information such as the detected position, posture, and shape of the luggage W is output to the robot controller 120A.

The height sensor 150 comprises a light-projecting part 150a and a light-receiving part 150b disposed on both sides thereof facing each other with the above described transport path of the conveyor 101 therebetween. The light-projecting part 150a projects a horizontal laser light toward the light-receiving part 150b per predetermined height position. The light-receiving part 150b receives the laser light projected from the light-projecting part 150a. The height sensor 150 is designed to detect the height-direction (vertical-direction) dimension of the luggage W that has passed through a light path 151 that extends between the light-projecting part 150a and the light-receiving part 150b, based on the laser light-receiving result of the light-receiving part 60b when the fed luggage 4 passed through the light path 151, that is, the height position of the laser light shielded by the luggage W. For example, given "H1" as the height position of the feeding surface of the conveyor 101 and "H2" as the height position of the laser light shielded by the luggage W, the height-direction dimension of the luggage W can be detected based on the difference between the coordinate value of "H2" in the height direction (so-called coordinate value in the Z-axis direction) and the coordinate value of "H1 in the height direction." Note that another method capable of detecting the height-direction dimension of the luggage W may be applied as the height sensor 150. The detected height-direction dimension information (hereinafter simply referred to as "height information" as appropriate) of the luggage W is output to the robot controller 120A.

As shown in FIG. 4, a conveyor 101B, a robot 110B, and a robot controller 120B are disposed as the work facility 100B in the unloading site. Note that the robot 110B is equivalent to the second robot and the fourth robot, and the robot controller 120B is equivalent to the second robot controller and the robot controller.

The robot 110B performs unloading work in which it holds and unloads the plurality of luggage W from the loaded body WW placed on the pallet P transported by the suitable transport means from the loading site, placing the plurality of luggage W on the feeding surface of the conveyor 101B. This robot 110B comprises a configuration similar to that of the robot 110A disposed in the loading site. That is, the robot 110B comprises the arm 111 and the actuators Ac1-Ac6, and the suction-type hand 112 is attached to the tip end of the arm 111. Further, though not shown in FIG. 4, the tool 112 that is a different type from the suction-type hand 112 is disposed near the robot 110B, and the robot 110B performs a tool replacement movement using an ATC or the like, thereby making it possible to replace the tool 112 on the tip end of the arm 111.

The conveyor 101B feeds the plurality of luggage W unloaded by the robot 110B in a predetermined transport direction (the direction indicated by an arrow B in FIG. 4).

The robot controller 120B is data-communicably connected to the above described central server 200 via the above described network cloud NW1. This robot controller 120B is intercommunicably connected to the servo motors of the respective actuators Ac1-Ac6 disposed on the above described arm 111, and controls the driving of the respective servo motors. With this arrangement, the overall movement of the respective actuators Ac1-Ac6, that is, the movement of the robot 110B, is controlled. Further, the robot controller 120B controls the movement of the tool 112 attached to the tip end of the above described arm 111.

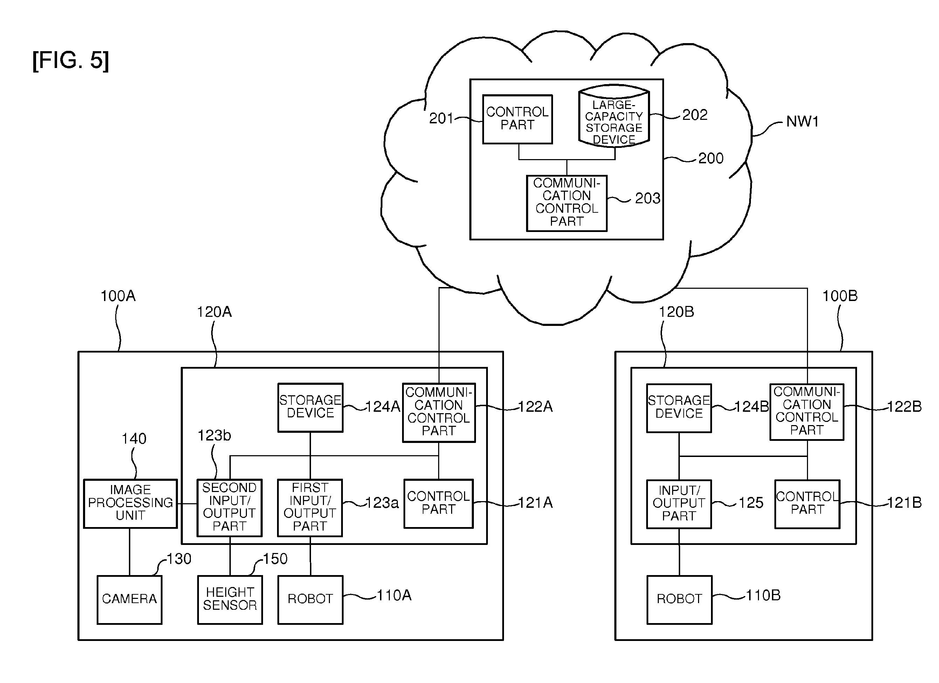

As shown in FIG. 5, the robot controller 120A of the work facility 100A disposed in the loading site comprises a control part 121A, a communication control part 122A, a first input/output part 123a, a second input/output part 123b, and a storage device 124A as a functional configuration.

The communication control part 122A controls the information communication performed with the central server 200 via the network cloud NW1.

The first input/output part 123a controls the information communication performed with the robot 110A. For example, the first input/output part 123a controls the input of the destination information of the luggage W output from the IC tag reader attached to the robot 110A.

The second input/output part 123b controls the information communication performed with the image processing unit 140 connected to the camera 130 and the height sensor 150. For example, the second input/output part 123b controls the input of the image analysis information (information such as the position, posture, and shape of the luggage W) output from the image processing unit 140, and the height information of the luggage W output from the height sensor 150.

The storage device 124A comprises an HDD (Hard Disk Drive) and the like, for example, and stores various information. For example, the storage device 124A stores the teaching information that regulates the movement of the robot 110A.

The control part 121A controls the entire robot controller 120A. For example, the control part 121A controls the driving of the above described respective servo motors of the robot 110A, controls the movement of the above described tool 112, controls the movement of the above described IC tag reader, and the like based on the teaching information stored in the storage device 124A, thereby controlling the movement of the robot 110A. Further, for example, the control part 121A generates loading information (details described later) of the respective luggage W loaded onto the pallet P by the robot 110A. The generated loading information of the respective luggage W is output to the central server 200 via the communication control part 122A and the network cloud NW1.

Further, the robot controller 120B of the work facility 100B disposed in the unloading site comprises a control part 121B, a communication control part 122B, an input/output part 125, and a storage device 124B as a functional configuration.

The communication control part 122B controls the information communication performed with the central server 200 via the network cloud NW1.

The input/output part 125 controls the information communication performed with the robot 110B.

The storage device 124B comprises an HDD and the like, for example, and stores various information. For example, the storage device 124B stores the teaching information that regulates the movement of the robot 110B.

The control part 121B controls the entire robot controller 120B. For example, the control part 121B controls the driving of the above described respective servo motors of the robot 110B, controls the movement of the above described tool 112, and the like based on the teaching information stored in the storage part 124B, thereby controlling the movement of the robot 110B.

Further, the central server 200 comprises a control part 201, a communication control part 202, and a large-capacity storage device 203 (loading information storage device) as a functional configuration.

The control part 201 controls the entire central server 200.

The communication control part 202 controls the information communication performed with the robot controllers 120A, 120B of the loading and unloading sites site via the network cloud NW 1.

The large-capacity storage device 203 is configured as an aggregate of a plurality of storage media that exist inside the network cloud NW1, and is capable of variably setting the storage capacity and the like. This large-capacity storage device 203 stores a loading information database.

The loading information database stores the loading information (details described later) of the respective luggage W loaded onto the pallet P by the robot 110A, input from the robot controller 120A of the loading site via the network cloud NW1.

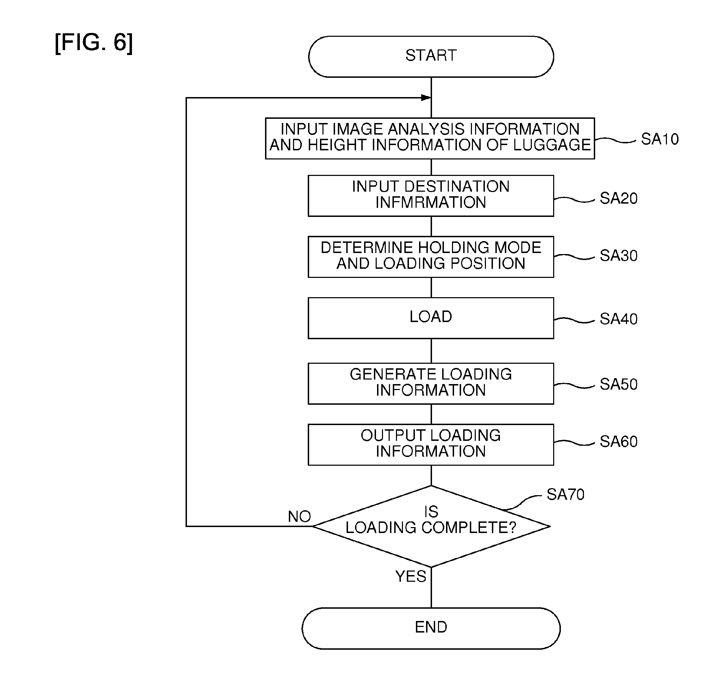

The following describes the control procedure executed by the control part 121A of the robot controller 120A disposed in the loading site, using FIG. 6.

In FIG. 6, the processing shown in this flow is started by a predetermined start operation (power ON of the robot controller 120A, for example). That is, when an image of the fed luggage W is taken by the camera 130, image analysis is conducted on the image information of the luggage W by the image processing unit 140, and the image analysis information (information such as the position, posture, and shape of the luggage W) is output to the robot controller 120A. Then, when the luggage W is further fed and passes through the above described light path 151, the height-direction dimension of the luggage W is detected by the height sensor 150, and the height information of the luggage W is output to the robot controller 120A. The control part 121A of the robot controller 120A, in step SA10, inputs the image analysis information output from the image processing unit 140 and the height information of the luggage W output from the height sensor 150, by the second input/output part 123b.

Subsequently, in step SA20, the control part 121A moves the robot 110A, acquires the destination information of the luggage W from the IC tag T affixed to the fed luggage W by the IC tag reader attached to the tip end side of the arm 111, and inputs the acquired destination information of the luggage W by the first input/output part 123a.

Then, the flow proceeds to step SA30 where the control part 121A determines the pallet P that is to serve as the loading destination (sorting destination) of the luggage W based on the destination information of the luggage W input in the above described step SA20. Further, the control part 121A determines the holding mode of the luggage W as the movement mode of the robot 110A when the luggage W is loaded onto the above described determined pallet P, and the loading position on the above described determined pallet P of the luggage W, based on the image analysis information and height information of the luggage W input in the above described step SA10. The holding mode of the luggage W refers to the mode related to the holding of the luggage W, such as the type of the tool 112 to be used for holding the luggage W, the holding position (coordinates) of the luggage W by the tool 112, the movement speed during the holding of the luggage W, and the like, for example.

Subsequently, in step SA40, the control part 121A moves the robot 110A based on the movement mode determined in the above described step SA30. With this arrangement, the holding position of the fed luggage W is held and the luggage W is loaded in the loading position onto the pallet P by the tool 112 attached to the tip end of the arm 111.

Then, the flow proceeds to step SA50 where the control part 121A generates the loading information of the luggage W loaded onto the pallet P by the robot 110A in the above described step SA40. The loading information of the luggage W includes holding mode information corresponding to the holding mode of the luggage W determined in the above described step SA30, and loading position information corresponding to the loading position of the luggage W determined in the above described step SA30. The procedure of this step SA50 functions as a loading information generating part.

Subsequently, in step SA60, the control part 121A outputs and stores the loading information (holding mode information and loading position information) of the luggage W generated in the above described step SA50 in the above described loading information database of the central server 200 via the network cloud NW1 by the communication control part 122A. The procedure of this step SA60 functions as a loading information output part.

Then, the flow proceeds to step SA70 where the control part 121A determines whether or not the loading of the plurality of luggage W fed by the conveyor 101A has been completed. In a case where loading has not been completed, the condition of step SA70 is not satisfied, the flow returns to the above described step SA10, and the same procedure is repeated. On the other hand, in a case where the loading has been completed, the condition of step SA70 is satisfied and the processing shown in this flow is ended. Note that, as described above, the loaded body WW formed by the stacking of the plurality of luggage W on the pallet P, placed on the pallets P, is transported to the unloading site in accordance with the destination by suitable transport means.

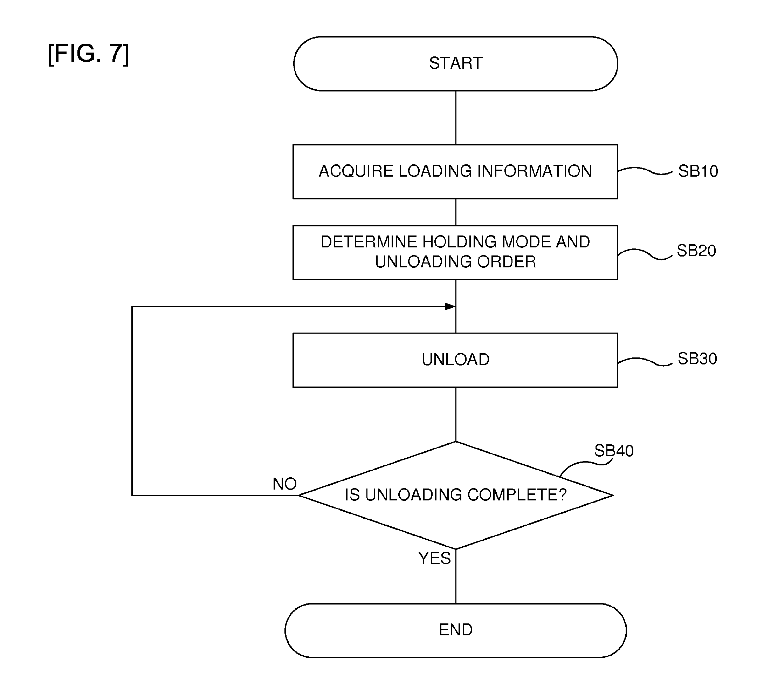

The following describes the control procedure executed by the control part 121B of the robot controller 120B disposed in the unloading site, using FIG. 7.

In FIG. 7, the processing shown in this flow is started by a predetermined start operation (power ON of the robot controller 120B, for example). First, in step SB10, the control part 121B of the robot controller 120B acquires (inputs) the loading information (the holding mode information and the loading position information) of the respective luggage W loaded onto the pallet P in accordance with this loading site, which is stored in the above described loading information database of the central server 200, via the network cloud NW1 and the communication control part 122B by the communication control part 203. The procedure of this step SB10 functions as a loading information input part.

Subsequently, in step SB20, the control part 121B determines the unloading order of the respective luggage W from the loaded body WW, and the holding mode of the respective luggage W (the mode related to the holding of the respective luggage W, such as the type of the tool 112 to be used for holding the respective luggage W, the holding position (coordinates) of the respective luggage W by the tool 112, the movement speed during the holding of the respective luggage W, and the like, for example) as the movement mode of the robot 110B when unloading the plurality of luggage W from the loaded body WW placed on the pallet P, based on the loading information of the respective luggage W loaded onto the pallet P, acquired in the above described step SB10. The procedure of this step SB20 functions as the first movement mode determining part and the second movement mode determining part.

Then, the flow proceeds to step SB30 where the control part 121B moves the robot 110B based on the movement mode determined in the above described step SB20. With this arrangement, the tool 112 attached to the tip end of the arm 111 holds the holding position of the luggage W of the loaded body WW placed on the pallet P, and unloads and places the luggage W onto the feeding surface of the conveyor 101B.

Subsequently, in step SB40, the control part 121B determines whether or not the unloading from the loaded body WW placed on the pallet P transported from the loading site has been completed. In a case where unloading has not been completed, the condition of step SB40 is not satisfied, the flow returns to the above described step SB30, and the same procedure is repeated. On the other hand, in a case where the unloading has been completed, the condition of step SB40 is satisfied and the processing shown in this flow is ended.

In the robot system 1 in this embodiment described above, at the loading site, the image information of the luggage W taken by the camera 130 is output from the image processing unit 140 to the robot controller 120A. Further, the height information of the luggage W that has passed through the above described light path 151 is output from the height sensor 150 to the robot controller 120A. Then, the robot controller 120A determines the movement mode of the robot 110A based on the image analysis information and the height information of the luggage W. The robot 110A moves based on the determined movement mode, making it possible to hold and load the plurality of luggage W and form the loaded body WW. The loading information of the respective luggage W loaded by the robot 110A is stored in the loading information database of the central server 200. At the unloading site, the robot controller 120B determines the movement mode of the robot 110B based on the loading information of the respective luggage W stored in the loading information database. The robot 110B moves based on the determined movement mode, making it possible to hold and unload the respective luggage W from the loaded body WW.

As described above, according to this embodiment, the luggage W can be he held and unloaded from the loaded body WW by the robot 110B even if the respective luggage W of the loaded body WW are not detected using a camera and image processing unit at the unloading site. With this arrangement, it is possible to simplify the configuration of the work facility 100B of the unloading site, reduce the cost for the work facility 100B, and improve convenience.

Further, in particular, according to this embodiment, the loading information database stores the holding mode information and loading position information of the respective luggage W as the loading information of the respective luggage W loaded by the robot 110A of the loading site. The robot controller 120B of the loading site determines the holding mode of the respective luggage W of the loaded body WW and the unloading order of the respective luggage W from the loaded body WW as the movement mode of the robot 110B, based on the holding mode information and the loading position information of the respective luggage W stored in the loading information database. With this arrangement, it is possible to smoothly and reliably hold and unload the luggage W from the loaded body WW by the robot 110B.

Note that the embodiments are not limited to the above, and various modifications may be made without deviating from the spirit and scope of the invention.

Further, the flows shown in the aforementioned FIG. 6 and FIG. 7 are not limited to the procedures shown in the embodiments, allowing procedures to be added, deleted, and changed in terms of order without deviating from the spirit and scope of the invention.

Further, other than that already stated above, techniques based on the above described embodiment may be suitably utilized in combination as well.

Although other examples are not individually described herein, various changes can be made according to the above described embodiments and the like without deviating from the spirit and scope of the invention.

### Explanation of Reference Numerals

- 1: Robot system
- 110A: Robot (First robot, Third robot)
- 110B: Robot (Second robot, Fourth robot)
- 120A: Robot controller (First robot controller, Robot controller)
- 120B: Robot controller (Second robot controller, Robot controller)
- 121A: Control part
- 121B: Control part
- 202: Large-capacity storage device (Loading information storage device)
- W: Luggage (Target object)
- WW: Loaded body

## Claims

1. A robot system, comprising
a first robot configured to hold and load one or more target objects to form a loaded body;
a first robot controller configured to control a movement of the first robot;
a loading information storage device configured to store loading information of each target object loaded by the first robot;
a second robot configured to hold and unload the one or more target objects from the loaded body; and
a second robot controller configured to control a movement of the second robot,
the second robot controller comprising a first movement mode determining part configured to determine a movement mode of the second robot based on the loading information of each target object stored in the loading information storage device, and controlling the movement of the second robot based on the movement mode determined by the first movement mode determining part.

2. The robot system according to claim 1, wherein
the loading information storage device stores at least one of holding mode information of each target object and loading position information of each target object as the loading information of each target object.

3. The robot system according to claim 2, wherein
the first movement mode determining part of the second robot controller determines at least one of a holding mode of each target object and an unloading order of each target object from the loaded body as the movement mode of the second robot, based on at least one of the holding mode information of each target object and the loading position information of each target object stored in the loading information storage device.

4. A robot controller configured to control a movement of a third robot configured to hold and load one or more target objects to form a loaded body, comprising
a loading information generating part configured to generate loading information of each target object loaded by the third robot; and
a loading information output part configured to output the loading information of each target object generated by the loading information generating part to a loading information storage device.

5. A robot controller configured to control a movement of a fourth robot configured to hold and unload one or more target objects from a loaded body formed by a loading of the one or more target objects in advance, comprising
a loading information input part configured to input loading information of each target object generated and stored in a loading information storage device at the time of a formation of the loaded body; and
a second movement mode determining part configured to determine a movement mode of the fourth robot based on the loading information of each target object input by the loading information input part;
the robot controller controlling the movement of the fourth robot based on the movement mode determined by the second movement mode determining part.
